# EUROPEAN PATENT SPECIFICATION

(11) **EP 1 580 576 B1**
(45) Date of publication and mention of the grant of the patent: **09.07.2008**
(21) Application number: 04400017.2
(22) Date of filing: 26.03.2004
(51) Int. Cl.: G01T 1/203, C08K 5/00, B29C 47/00, H01J 43/00

(54) **Wavelength shifter, method for its production and photomultiplier incorporating a wavelength shifter**
Wellenlängenwandler, Verfahren zu ihrer Herstellung und Photovervielfacher enthaltend einen Wellenlängenwandler
Translateur de longueur d'onde, son procédé de fabrication et photomultiplicateur incorporant un translateur de longueur d'onde

(43) Date of publication of application: 28.09.2005
(73) Proprietor: Deutsches Elektronen-Synchrotron DESY, 22607 Hamburg (DE)
(72) Inventor: Resconi, Elisa, 69115 Heidelberg (DE)
(74) Representative: UEXKÜLL & STOLBERG

(56) References cited:
- JP-A- 2001 271 220
- US-A- 4 495 084
- GIANNINI G ET AL: "Plastic scintillator bar with WLS fiber calorimeter for neutrino physics" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, vol. 461, no. 1-3, 1 April 2001 (2001-04-01), pages 316-318, XP004240235 ISSN: 0168-9002
- BAULEO P ET AL: "UV-enhancement of photomultiplier response: a study of wavelength shifters for the AMANDA/IceCube detector" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, vol. 443, no. 1, March 2000 (2000-03), pages 136-147, XP004192429 ISSN: 0168-9002

## Description

The invention pertains to a wavelength shifter, a method for its production and a photomultiplier incorporating a wavelength-shifter, and more particularly to a wavelength shifter for use in the observation of high energy corpuscular radiation by secondary light (photon) emission in a wavelength range in which light can be sensed and measured. A particular application is the observation of neutrinos through the secondary emission of photons triggered by the impact of the neutrinos on a target material and producing Cherenkov photons that are detected with a sensor device such as a photomultiplier.

Prior art approaches to enhance light collection efficiency comprise the use of so called wavelength shifters incorporating wavelength-shifting dyes and used inter alia with a photomultiplier. Such wavelength shifting dyes are substances that absorb photons and re-emit photons at greater wavelength. Typically wavelength shifting dyes are available in powder form. They also can have the form of liquids and even of gases. A wavelength shifter is a device in solid, liquid or gaseous form made up of a wavelength shifter -dye and other materials, mostly substrate materials. Wavelength shifters have been used with sensors in particle detection since many decades and various application studies for Cherenkov detectors were performed aiming at detecting light in the extreme UV-range.

The capability of wavelength shifters to absorb UV photons and to re-emit them at longer wavelength with high efficiency and short decay time (few nanoseconds) represents one possibility to increase the UV light collection efficiency in fast photon detection. Coupling wavelength shifters to standard photomultiplier tubes is principally a cost-effective alternative with respect to UV sensitive photon sensors as for example photomultipliers with a quartz light window. Wavelength shifters are used in a variety of applications. They can be dissolved in organic scintillators as well as in water, combined with plastic materials like acrylic (i.e. acrylic panels) or scintillating polymers like polyvinyltoluene, polystyrene and others (i.e. plastic scintillators).

An example for such calorimeter including plastic scintillator bars that are coupled to wavelength shifters is described in "Plastic scintillator bar with WLS fiber calorimeter for neutrino physics", G. Giannini et al., Nuclear Instruments & Methods in Physics Research, A 461 (2001) 316-318. The scintillator blocks consist of polystyrene to which scintillating and wavelength shifting chemicals were added, namely 1 wt.% PTP (C₁₈H₁₄) and 0,01 wt.% bisMSB (C₂₄H₂₂) in one case and lone wt.% PPO (C₁₅H₁₁NO) and 0,01 wt.% POPOP (phenyl-oxazolyl-phenyl-oxazolyl-phenyl). Each scintillator plastic bar has a central channel extending along the longitudinal axis of the bar for receiving filaments of wavelength shifter materials. In between the scintillator bars iron bars are placed in an alternating manner to make up the sampling calorimeter structure. The filaments of the wavelength shifter transporting light from the scintillator bars were read out by multi-anode photomultipliers. Another example of a plastic scintillator is described in US Patent 4,495,084 relating to a plastic scintillator containing a styrenic unit as the matrix resin thereof, wherein the resin itself is therefore a scintillator.

Solid dyes may be fixed to or incorporated in a solid substrate from which "light windows" of light sensitive sensors, particularly photomultiplier tubes, are made. The most sensitive and outstanding field of application is the observation of neutrinos at the South Pole.

A neutrino is an elementary particle produced in the universe by various astrophysical mechanisms and it is able to pass very thick layer of matter, even the entire earth, without interaction. The light produced in a neutrino interaction is mainly emitted in the UV range (i.e. Cherenkov light).

A photomultiplier tube is a device capable of converting a weak light pulse (few hundreds of photons) into a corresponding electrical signal without adding a large amount of random noise to the signal. The electrical signal can be amplified.

Photomultipliers are the most widely used devices for photon detection. They find many applications in optical spectroscopy, in nuclear and particle physics, in atomic and laser physics as well as in astronomy.

The instrument presently installed at the South Pole for the observation of neutrinos is called AMANDA (**A**ntarctic **M**uon **A**nd **N**eutrino **D**etector **A**rray) and is a high energy neutrino detector. It is composed of 600 optical modules placed deep in the Antarctic ice. They collect the light emitted by a neutrino passing through the ice cap. A future development of AMANDA is called IceCube and will be composed of more than 5.000 optical modules.

Some aspects of this detector are described in "UV-enhancement of photomultiplier response: A study of wavelength shifters for the AMANDA/IceCube detector" by P. Bauleo et al., Nuclear Instruments and Methods in Physics Research, A 443 (2000) 136-147.

Each such optical module is composed of a photomultiplier tube (optical sensor sensitive to light) encapsulated by a glass sphere of 33 cm in diameter. Only the lower hemisphere of the optical module must be covered by a wavelength-shifter. The encapsulating glass is transparent for photons with a wavelength greater than 330 nm. Therefore, the part of the Cherenkov spectrum (i.e. proportional to 1/wavelength square) below this cut-off does not contribute to the signal production even if the medium in which these photons are generated, e.g. the ice cap at the South Pole, is transparent at wavelength down to 200 nm and thus collection efficiency is not yet as high as is desirable.

The under-ice neutrino telescope IceCube will measure the flux of ultra-high energy neutrinos via the detection of the Cherenkov light produced by the neutrino induced secondary charged particles. As the spectral sensitivity in the UV region of the optical modules is limited by the transmission properties of the light window of the photomultiplier housing, the sensitivity of the optical module and hence the detector performances can be enhanced via the use of a wavelength shifter with the light window.

One of the limiting factors of this detection technique is that the standard photomultipliers commercially available are sensitive to radiant energy in the blue-green range of the electromagnetic spectrum. Photomultipliers sensitive to the ultraviolet and the near-infrared ranges are also available but they are very expensive. The detecting area or volume that can be covered with a photomultiplier is limited by the high costs of these devices.

Wavelength shifting dyes combined with transparent plastic substrates like acrylic or scintillating polymer or polystyrene are used in order to enhance the photomultiplier's sensitivity in the ultraviolet range and to cover wider detector areas or volumes, respectively.

Wavelength shifting dyes used with transparent acrylic polymer substrates suffer from several shortcomings. This substrate material absorbs photons with a wavelength smaller then approximately 300 nm, is rigid but brittle and its elongation at rupture is a few percents only. Furthermore, it has a poor low temperature and fatigue resistances and its processing temperature is high (appr. 250 °C).

Wavelength shifting dyes used with polystyrene polymer substrates are limited due to the fact that an energy transfer from the polymer to the wavelength shifting dye is required. The index of refraction of polystyrene is 1.58 and thus greater than the index of refraction of a typical glass. Scintillating polymers like polyvinyltoluene and polystyrenes and others emit scintillating light when ionizing radiation passes through which is a limitation in case only photons have to be detected.

The wavelength shifter captures photons which hit the wavelength shifter and causes the secondary emission of another photon. Each photon is sensed by the sensor, mostly a photomultiplier. On its way to the sensitive target of the sensor it should not loose energy or strength, i.e. there should be as little absorption as possible. The performance thus achieved heretofore does not exceed approximately 50 %, i.e. in average only every second photon reaches the sensor. The optical modules of the AMANDA detector absorb nearly 70% of the Cherenkov light in the wavelength range of 200 to 330 nm and this means that only few photo-electrons are produced.

JP 2001 271220 A describes a material comprising the features of the preamble of claim 1. It relates to a fishing line composed of a polyvinylidene fluoride-based monofilament, which comprises a polyvinylidene fluoride resin composition containing preferably 0,001-0,5 wt.% of a perylene-based fluorescence dye based on 100 wt.% of a polyvinylidene fluoride resin. The drawback of this material is that it is not transparent to the re-emitted, wavelength-shifted light, because absorption and emission spectra are largely overlapping. Therefore, its light collection efficiency as a wavelength shifter is rather low.

It is an object of the invention to remedy the shortcomings of the above-mentioned prior art and to provide a wavelength shifter with enhanced wavelength shifting capability and improved performance, i.e. with improved light collection efficiency. The wavelength shifter shall be capable of absorbing UV-light and re-emitting light in the visible range with a very short decay time. Part of this light may be recovered if a wavelength shifter layer is placed outside the optical module. It does absorb the Cherenkov light below the glass cut-off (330 nm) and re-emits photons at a wavelength where the optical module components are transparent (greater then 330 nm).

According to the invention a wavelength shifter as defined in claim 1 is provided.

Furthermore, a method is proposed according to claim 2 for the production of such a wavelength shifter material for the manufacture of wavelength shifter devices or devices incorporating a wavelength shifter like photomultipliers. Finally, a photomultiplier device according to claim 7 is to be provided of high efficiency at moderate costs.

.The term foil is to be construed to encompass thin films.

Wavelength shifting dye, as defined in claim 1, used with fluoropolymers as substrate material allows a significant improvement in performances and application. This is due to the following characteristics: The substrate material behaved transparent down to 200 nm and did not emit fluorescence light; the index of refraction is 1.35; the foil is flexible, has an elongation at rupture at around 500 % and has a high temperature and fatigue resistances; the processing temperature (extrusion temperature) is below 200 °C. No energy transfers are involved in the light re-emission from the substrate material to the wavelength shifting dye. The absorption spectrum and the emission spectrum reproduce the absorption and emission spectrum of the fluorescence dye incorporated; the decay time is in the order of only a few nsec; the Stokes shift and the quantum yield are very high.

Most favourable for the observation of neutrinos is a wavelength shifter according to the invention if the wavelength shifting dye is 2,5-Diphenyloxazol (PPO).

The quantum yield of the extruded foil was measured to be up to 80 % with respect to PPO in cyclohexane and in good approximation independent of the excitation wavelength.

The method for manufacturing such wavelength-shifter comprises the steps of claim 2, including dissolving a powder mixture of the fluoro-thermoplastic material with the wavelength shifting dye in a solvent to obtain a solution of a concentration of 1 to 20% by weight of the dye in the fluoro-thermoplastic material, evaporating the solvent to obtain dry agglomerates of the fluoro-thermoplastic material and the wavelength shifting dye, mixing the dry agglomerates with additional fluoro-thermoplastic material in a ratio of 5 to 15 parts fluoro-thermoplastic material to 1 part of agglomerates in an extrusion process to obtain irregular pellets, and extruding the pellets doped with the wavelength shifting dye to form a transparent foil.

In order to bring these two materials together it is not possible to feed them together into an extrusion machine for the production of a film or a foil. Crystallization as well as disuniformity and optical instability would develop. Therefore, a master-solution of the substrate material and the chosen wavelength shifter-dye in acetone is first to be prepared. The acetone is then evaporated with a suitable technique, preferably by spray drying. The powder obtained is extruded into granules and the granules are then extruded into a film or foil.

A photomultiplier according to the invention has its light window for incident radiation, particularly UV or visible light, covered with a wavelength-shifter foil of a fluoro-thermoplastic material (fluoropolymers) having a very high transmittance in the UV range selected from the group comprising tetrafluoroethylene, hexafluoropropylene, vinylidene fluoride and a polymer of tetrafluoroethylene and ethylene, which is doped with a wavelength shifting dye being an organic fluorescent compound, as defined in claim 1, 4, affixed to its glass vessel.

The wavelength at which the molar extinction coefficient has a minimum the absorption is greater than 90%. The source spectrum is a pure Cherenkov spectrum. 33% of the source light will be absorbed by the wavelength shifter and re-emitted in the direction of the optical module if covered by the wavelength shifter of the invention. As a result, the quantum yield of the optical module can be improved by a factor of about 0.5.

For the specific application of the IceCube detector it is proposed to thermoform the foil around the glass sphere encapsulating the photomultiplier.

Absorbance measurements and stability tests were carried out and shows stably good results. The absorbance of the foil was measured with a double beam spectrophotometer (Cary 400 UV-Vis (VARIAN)). A slide of polymer was measured after submerging the sample in a 1 mm quartz cuvette filled with cyclohexane. The cyclohexane was used because it is very transparent in the entire spectral range of interest. A baseline cyclohexane vs cyclohexane is realized at the beginning of the measurements in order to be able to distinguish the absorption effect of the quartz cuvette and of the cyclohexane from the foil.

Quantum yield measurements by fluorescence measurements were carried out using a fluorescence spectrophotometer (Cary Eclipse (VARIAN)).

The result is a transparent and uniform plastic sheet which combines the characteristics of the fluoropolymer and absorbs and re-emits light as the dye molecule does.

Other applications of the new wavelength-shifter, are for example large water Cherenkov detectors (proton decay, long-baseline neutrino detector etc) or liquid noble gas scintillation detectors.

## Claims

1. Wavelength shifter comprising a supporting structure of solid material and a fluorescent wavelength shifting dye capable to absorb light in the UV range and re-emit light in the visible range, the dye being homogeneously distributed therein, the supporting material is a fluoro-thermoplastic material (fluoropolymers) having a very high transmittance in the UV range selected from the group comprising tetrafluoroethylende, hexafluoropropylene, vinylidene fluoride and a polymer of tetrafluoroethylene and ethylene, and the wavelength shifting dye is an organic fluorescent compound,
**characterized in that** the wavelength shifting dye is selected from the group comprising 1-phenyl-3-mesityl-2-pyxazoline (C₁₈H₂₀N₂), 1,4 diphenyl-benzol (C₁₈H₁₄), p-Terpheynl, 2-(4-Biphenylyl)-5-(4-t-butylphenyl)-1,3,4-oxadiazol (Butyl-PBD), 1,4bis (5-phenyloxazol-2-yl) benzene (POPOP), p-bis (o-methylstyryl) benzene (bis-MSB), and 2,5-Diphenyloxazol (PPO).

2. Method for the production of the wavelength shifter of of claim 1 comprising the steps:
1. dissolving a powder mixture of the fluoro-thermoplastic material with the wavelength shifting dye in a solvent to obtain a solution of concentration of 1% to 2% by weight of the dye in the fluoro-thermoplastic material, wherein the wavelength shifting dye is selected from the group comprising 1-phenyl-3-mesityl-2-pyrazoline (C₁₈H₂₀N₂), 1, 4 diphenyl-benzol (C₁₈H₁₄), p-Terpheynl, 2-(4-Biphenylyl)-5-(4-t-butylphenyl)-1,3,4-oxadiazol (Butyl-PBD), 1,4bis (5-phenyloxazol-2-yl) benzene (POPOP), p-bis (o-methylstyryl) benzene (bis-MSB), and 2,5-Diphenyloxazol (PPO);
2. evaporating the solvent to obtain dry agglomerates of the fluoro-thermoplastic material and the wavelength shifting dye;
3. mixing the dry agglomerates with additional fluoro-thermoplastic material in a ratio of 1 to 15 parts fluoro-thermoplastic material to one part of agglomerates in an extrusion process to obtain a regular pellets;
4. extruding the pellets doped with the wavelength shifting dye to form a transparent foil.

3. Method according to claim 2 wherein in the first step the mixture is dissolved in acetone.

4. Method according to claim 2 wherein in the second step the solution is spray-dried.

5. Method according to claim 2 wherein the third step the ratio of fluoro-thermoplastic material to agglomerates is in the range of 10 parts fluoro-thermoplastic material to one part agglomerates.

6. Method according to claim 2 wherein in the fourth step a transparent film of 100 µm to 2 mm thickness or a transparent foil of 300 to 600 µm thickness is extruded.

7. Photomultiplier having its light window for incident radiation, particularly UV-light covered with a wavelength shifter foil, wherein a wavelength shifter foil according to claim 1 is fixed to its glass vessel.

## Patentansprüche

1. Wellenlängenschieber mit einer Trägerstruktur aus festem Material und einem Fluoreszenz-Wellenlängenschieberfarbstoff, der dazu in der Lage ist, Licht im UV-Bereich zu absorbieren und Licht im sichtbaren Bereich wieder zu emittieren, wobei der Farbstoff homogen darin verteilt ist, wobei das Trägermaterial ein fluorthermoplastisches Material (Fluorpolymere) mit einer sehr hohen Durchlässigkeit im UV-Bereich ausgewählt aus der Gruppe umfassend Tetrafluorethylen, Hexafluorpropylen, Vinylidenfluorid und Polymer von Tetrafluorethylen und Ethylen ist und der Wellenlängenschieberfarbstoff eine organische Fluoreszenzverbindung ist,
**dadurch gekennzeichnet, dass** der Wellenlängenschieberfarbstoff ausgewählt ist aus der Gruppe umfassend 1-Phenyl-3-mesityl-2-pyrazolin (C₁₈H₂₀N₂), 1,4-Diphenylbenzol (C₁₈H₁₄), p-Terphenyl, 2-(4-Biphenylyl)-5-(4-t-butylphenyl)-1,3,4-oxadiazol (Butyl-PBD), 1,4-Bis(5-phenyloxazol-2-yl)benzol (POPOP), p-Bis (o-methylstyryl)benzol (Bis-MSB) und 2,5-Diphenyloxazol (PPO).

2. Verfahren zur Herstellung des Wellenlängenschiebers gemäß Anspruch 1 mit den Schritten:
1. Auflösen einer Pulvermischung des fluorthermoplastischen Materials mit dem Wellenlängenschieberfarbstoff in einem Lösungsmittel, um eine Lösung der Konzentration von 1 Gew.-% bis 2 Gew.-% des Farbstoffs in dem fluorthermoplastischen Material zu erhalten, wobei der Wellenlängenschieberfarbstoff ausgewählt ist aus der Gruppe umfassend 1-Phenyl-3-mesityl-2-pyrazolin (C₁₈H₂₀N₂), 1,4-Diphenylbenzol (C₁₈H₁₄), p-Terphenyl, 2-(4-Biphenylyl)-5-(4-t-butylphenyl)-1,3,4-oxadiazol (Butyl-PBD), 1,4-Bis(5-phenyloxazol-2-yl)benzol (POPOP), p-Bis(o-methylstyryl)benzol (Bis-MSB) und 2,5-Diphenyloxazol (PPO),
2. Verdampfen des Lösungsmittels, um trockene Agglomerate des fluorthermoplastischen Materials und des Wellenlängenschieberfarbstoffs zu erhalten,
3. Mischen der trockenen Agglomerate mit zusätzlichem fluorthermoplastischen Material in einem Verhältnis von 1 bis 15 Teile fluorthermoplastisches Material zu einem Teil Agglomerate in einem Extrusionsverfahren, um regelmäßige Pellets zu erhalten,
4. Extrudieren der mit dem Wellenlängenschieberfarbstoff dotierten Pellets, um eine transparente Folie zu bilden.

3. Verfahren nach Anspruch 2, bei dem in der ersten Stufe die Mischung in Aceton aufgelöst wird.

4. Verfahren nach Anspruch 2, bei dem in der zweiten Stufe die Lösung sprühgetrocknet wird.

5. Verfahren nach Anspruch 2, bei dem in der dritten Stufe das Verhältnis von fluorthermoplastischem Material zu Agglomeraten im Bereich von 10 Teilen fluorthermoplastisches Material zu einem Teil Agglomerate liegt.

6. Verfahren nach Anspruch 2, bei dem in der vierten Stufe ein transparenter Film mit einer Dicke von 100 µm bis 2 mm oder eine transparente Folie mit einer Dicke von 300 bis 600 µm extrudiert wird.

7. Photomultiplier mit einem Lichtfenster für Einfallstrahlung, insbesondere UV-Licht, beschichtet mit einer Wellenlängenschieberfolie, wobei eine Wellenlängenschieberfolie gemäß Anspruch 1 an dessen Glasküvette fixiert ist.

## Revendications

1. Dispositif de décalage de longueur d'onde comprenant une structure de support en une matière solide et un colorant fluorescent de décalage de longueur d'onde, pouvant absorber la lumière dans le domaine des UV et réémettre de la lumière dans le domaine visible, le colorant étant distribué de façon homogène dans celui-ci, la matière de support étant une matière thermoplastique fluorée (polymères fluorés) ayant une transmittance de la lumière très élevée dans le domaine des UV, choisie parmi le groupe comprenant le tétrafluoroéthylène, l'hexafluoropropylène, le fluorure de vinylidène, et un polymère de tétrafluoroéthylène et d'éthylène, et le colorant de décalage de longueur d'onde étant un composé organique fluorescent,
**caractérisé en ce que** le colorant de décalage de longueur d'onde est choisi parmi le groupe comprenant la 1-phényl-3-mésityl-2-pyrazoline (C₁₈H₂₀N₂), le 1,4-diphényl-benzol (C₁₈H₁₄), le p-terphényle, le 2-(4-biphénylyl)-5-(4-t-butylphényl)-1,3,4-oxadiazol (butyl-PBD), le 1,4-bis-(5-phényloxazol-2-yl) benzène (POPOP), le p-bis-(o-méthylstyryl) benzène (bis-MSB) et le 2,5-diphényloxazol (PPO).

2. Procédé pour la production du dispositif de décalage de longueur d'onde selon la revendication 1, comprenant les étapes consistant à :
1. dissoudre un mélange pulvérulent de la matière thermoplastique fluorée avec le colorant de décalage de longueur d'onde dans un solvant pour obtenir une solution du colorant à une concentration de 1 % à 2 % en poids dans la matière thermoplastique fluorée, dans lequel le colorant de décalage de longueur d'onde est choisi parmi le groupe comprenant la 1-phényl-3-mésityl-2-pyrazoline (C₁₈H₂₀N₂), le 1,4-diphényl-benzol (C₁₈H₁₄), le p-terphényle, le 2-(4-biphénylyl)-5-(4-t-butylphényl)-1,3,4-oxadiazol (butyl-PBD), le 1,4-bis-(5-phényloxazol-2-yl) benzène (POPOP), le p-bis-(o-méthylstyryl) benzène (bis-MSB) et le 2,5-diphényloxazol (PPO) ;
2. évaporer le solvant pour obtenir des agglomérats secs de la matière thermoplastique fluorée et du colorant de décalage de longueur d'onde ;
3. mélanger les agglomérats secs avec de la matière thermoplastique fluorée supplémentaire selon un rapport de 1 à 15 parties de matière thermoplastique fluorée pour une partie d'agglomérats dans une opération d'extrusion pour obtenir des pastilles uniformes ;
4. extruder des pastilles dopées avec le colorant de décalage de longueur d'onde pour former une feuille transparente.

3. Procédé selon la revendication 2, dans lequel, dans la première étape, le mélange est dissous dans de l'acétone.

4. Procédé selon la revendication 2, dans lequel, dans la deuxième étape, la solution est séchée par atomisation.

5. Procédé selon la revendication 2, dans lequel, dans la troisième étape, le rapport entre matière thermoplastique fluorée et agglomérats est dans la plage de 10 parties de matière thermoplastique fluorée pour une partie d'agglomérats.

6. Procédé selon la revendication 2, dans lequel, dans la quatrième étape, on extrude un film transparent d'une épaisseur de 100 µm à 2 mm, ou une feuille transparente d'une épaisseur de 300 à 600 µm.

7. Photomultiplicateur dont la fenêtre à lumière pour un rayonnement incident, en particulier de la lumière UV, est recouverte d'une feuille formant dispositif de décalage de longueur d'onde, dans lequel une feuille formant dispositif de décalage de longueur d'onde selon la revendication 1 est fixée à son récipient de verre.
